# EUROPEAN PATENT SPECIFICATION

(11) **EP 2 324 080 B1**
(45) Date of publication and mention of the grant of the patent: **13.03.2013**
(21) Application number: 09778390.6
(22) Date of filing: 08.09.2009
(51) Int. Cl.: C09B 35/21, C09B 35/30

(54) **ACID DYES**
SÄUREFARBSTOFFE
COLORANTS ACIDES

(30) Priority: 11.09.2008 EP 08164173
(43) Date of publication of application: 25.05.2011
(73) Proprietor: Clariant Finance (BVI) Limited, Road Town, Tortola (VG)
(72) Inventor: NUSSER, Rainer, 79395 Neuenburg (DE); GEIGER, Ulrich, 79395 Neuenburg/Rhein (DE); HASEMANN, Ludwig, 79379 Muellheim-Niederweiler (DE)
(74) Representative: Hütter, Klaus
(86) International application number: PCT/EP2009/006501
(87) International publication number: WO 2010/028799

(56) References cited:
- EP-A- 0 211 325
- WO-A-02/46318
- WO-A-2007/131957
- US-A- 2 945 848
- US-A- 3 657 218

## Description

The invention relates to novel acid dyes, a process for their preparation and their use for dyeing organic substrates.

Acid dyes are known and dyes with bridging members are known as well.

WO 02/46318 A discloses a process for trichromatic dyeing and printing of natural or synthetic polyamide fibers.

WO 2007/131957 A discloses amphoteric acid dyes where symmetrical monoazo chromophores are linked via aliphatic bridging groups.

The invention provides compounds of the general formula (I) 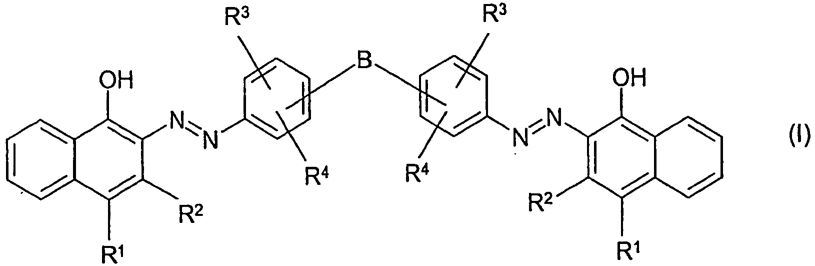
- R¹: signifies H or a sulpho group
- R²: signifies H or a sulpho group, R¹ has to be different from R².
- R³: signifies methoxy or methyl;
- R⁴: signifies H,
- B: signifies a group with the formula -CR⁵R⁶-, wherein
- R⁵: signifies H,
- R⁶: signifies , an unsubstituted aryl group or a substituted aryl group, wherein the aryl groups are phenyl groups and the substituted aryl groups are substituted by a methyl group or a methoxy group.

The most preferred R⁶ signifies phenyl.

The compounds of formula (I) bear at least one anionic substituent, preferably 1 or 2 or 3 anionic substituents, of which 2 anionic substituents are very particularly preferred.

The anionic substituents are sulpho groups.

Preferred compounds of the formula (I) preferably have 1, 2 or 3 and more preferably 2 sulpho groups. The preferably 2 sulpho groups are by preference in one of the subtituents R¹, R² or form the subtituent R¹, R². In the most preferred compound R¹ signifies a sulpho group and R² signifies H.

Preferably the compounds of the formula (I) have the formual (I') 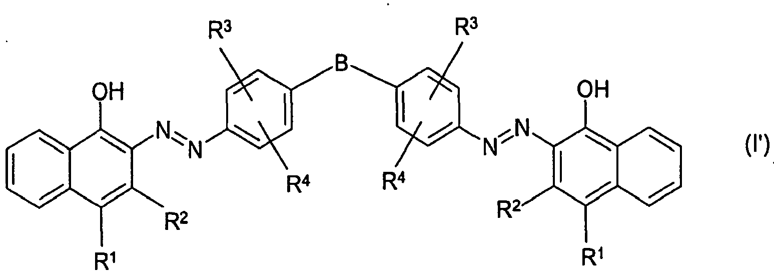 wherein the substituents have the meaning as indicated above.

The invention also provides a process for preparing compounds of the formula (I). The present invention's compounds of the formula (I) can be prepared under conventional conditions in conventional processes.

In these processes, both the amine functions of compounds of the formula (II) 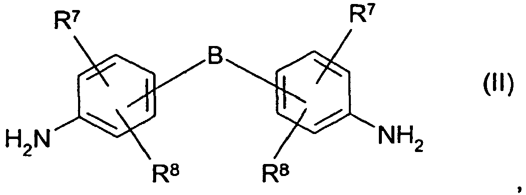 which are known from the literature are conventionally diazotized and coupled onto totally two equivalents of a compound of the formula (III) 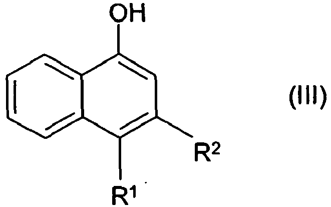 where the substituents are each as defined above.

In this procedure, the particular amine is cooled down to 0 - 10°C or preferably to 0 - 5 °C and diazotized by addition of nitrosyl sulphuric acid. Thereafter, the diazotized amine is allowed to react with the compound (III) as required, preferably in aqueous solution.

The dyes of the formula (I) can be isolated from the reaction medium by conventional processes, for example by salting out with an alkali metal salt, filtering and drying, if appropriate under reduced pressure and at elevated temperature.

Depending on the reaction and/or isolation conditions, the dyes of the formula (I) can be obtained as free acid, as salt or as mixed salt which contains for example one or more cations selected from alkali metal ions, for example the sodium ion, or an ammonium ion or alkylammonium cation, for example mono-, di- or trimethyl- or -ethylammonium cations. The dye can be converted by conventional techniques from the free acid into a salt or into a mixed salt or vice versa or from one salt form into another. If desired, the dyes can be further purified by diafiltration, in which case unwanted salts and synthesis by-products are separated from the crude anionic dye.

The removal of unwanted salts and synthesis by-products and partial removal of water from the crude dye solution is carried out by means of a semipermeable membrane by applying a pressure whereby the dye is obtained without the unwanted salts and synthesis by-products as a solution and if necessary as a solid body in a conventional manner.

The dyes of the formula (I) and their salts are particularly suitable for dyeing or printing fibrous material consisting of natural or synthetic polyamides in red to violet shades. The dyes of the formula (I) and their salts are suitable for producing Inkjet printing inks and for using these Inkjet printing inks to print fibrous material which consists of natural or synthetic polyamides or cellulose (paper for example).

The invention accordingly provides from another aspect for the use of the dyes of the formula (I), their salts and mixtures for dyeing and/or printing fibrous materials consisting of natural or synthetic polyamides. A further aspect is the production of Inkjet printing inks and their use for printing fibrous materials consisting of natural or synthetic polyamides.

Dyeing is carried out as per known processes, see for example the dyeing processes described in Ullmanns Encyklopädie der technischen Chemie, 4th Edition, 1982, Volume 22, pages 658-673 or in the book by M. Peter and H.K. Rouette, Grundlagen der Textilveredlung, 13th Edition, 1989, pages 535-556 and 566-574. Preference is given to dyeing in the exhaust process at a temperature of 30 to 140°C, more preferably 80 to 120°C and most preferably at a temperature of 80 to 100°C, and at a liquor ratio in the range from 3:1 to 40:1.

The substrate to be dyed can be present in the form of yarn, woven fabric, loop-formingly knitted fabric or carpet for example. Fully fashioned dyeings are even permanently possible on delicate substrates, examples being lambswool, cashmere, alpaca and mohair. The dyes of the invention are particularly useful for dyeing fine-denier fibres (microfibres).

The dyes according to the present invention and their salts are highly compatible with known acid dyes. Accordingly, the dyes of the formula (I), their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dyebath onto the substrate. The dyes of the present invention can be used in particular together with certain other dyes having suitable chromophores. The ratio in which the dyes are present in a combination shade dyeing or printing composition is dictated by the hue to be obtained.

The novel dyes of the formula (I), as stated above, are very useful for dyeing natural and synthetic polyamides, i.e. wool, silk and all nylon types, on each of which dyeings having a high fastness level, especially good light fastness and good wet fastnesses (washing, alkaline perspiration) are obtained. The dyes of the formula (I) and their salts have a high rate of exhaustion. The ability of the dyes of the formula (I) and their salt to build up is likewise very good. On-tone dyeings on the identified substrates are of outstanding quality. All dyeings moreover have a constant hue under artificial light. Furthermore, the fastness to decating and boiling is good.

One decisive advantage of the novel dyes is that they are metal free and provide very level dyeings.

The compounds according to the invention can be used as an individual dye or else, owing to their good compatibility, as a combination element with other dyes of the same class having comparable dyeing properties, for example with regard to general fastnesses, exhaustion value, etc. The combination shade dyeings obtained have similar fastnesses to dyeings with the individual dye.

The invention's dyes of the formula (I) can also be used as red components in trichromatic dyeing or printing. Trichromatic dyeing or printing can utilize all customary and known dyeing and printing processes, such as for example the continuous process, exhaustion process, foam dyeing process and Ink-Jet process.

The composition of the individual dye components in the trichromatic dye mixture used in the process of the invention depends on the desired hue. A brown hue for example preferably utilizes 55 - 65 % by weight of a yellow component, 20 - 30 % by weight of the invention's red component and 10 - 20 % by weight of a blue component.

The red component, as described above, can consist of a single component or of a mixture of different red individual components conforming to the formula (I). Preference is given to double and triple combinations.
Particularly preferred blue and/or yellow components are described in WO2002/46318.

In the examples which follow, parts and percentages are by weight and temperatures are reported in degrees Celsius.

### Example 1:

33.4 Parts (0.1 mol) of 3,3'-dimethoxy-4,4'-diaminotriphenylmethane are tetrazotised according to known methods with 13.8 parts (0.2 mol) of sodium nitrite at 0-5 °C in 250 parts of water and 60 parts of hydrochloric acid (ca. 30%). 44.8 parts (0.2 mol) of a compound of the formula 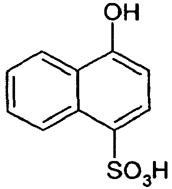 dissolved in 250 parts of water are added over 30 minutes to the ice cold tetrazotised solution. By the addition of 20% sodiumcarbonate solution the pH is brought to 5-5.5 yielding a dyestuff of formula

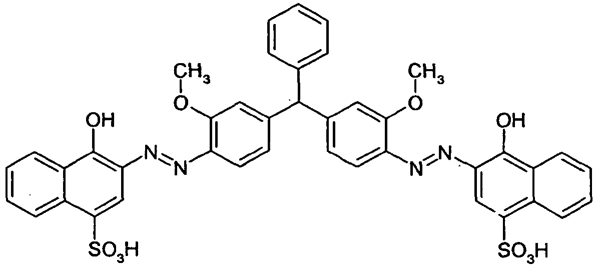

The dyestuff can be isolated by salting out with sodium chloride, filtered off and dried at 50°C under reduced pressure or the reaction mixture however can be used directly for dyeing without isolation the product. On wool and in particular on polyamide fibres it produces red dyeings having very good wet fastness properties (lamda(max) (λₘₐₓ) = 522 nm).

### Example 2

30.2 Parts (0.1 mol) of 3,3'-Dimethyl-4,4'-diaminotriphenylmethane are tetrazotised according to known methods with 13.8 parts (0.2 mol) of sodium nitrite at 0-5 °C in 200 parts of water and 60 parts of hydrochloric acid (ca. 30 %). 64.6 parts (0.2 mol) of a compound of the formula 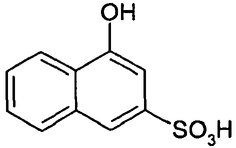 dissolved in 350 parts of water are added over 30 minutes to the ice cold tetrazotised solution. By the addition of 20% Sodiumcarbonate solution the pH is brought to 5-5.5 yielding a dyestuff of formula

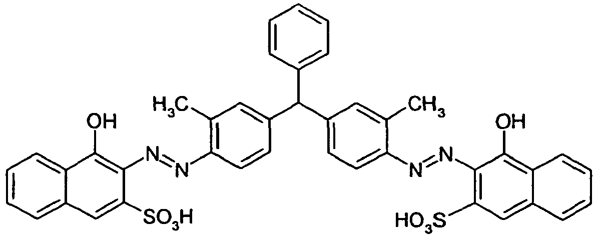

The dyestuff can be isolated by salting out with sodium chloride, filtered off and dried at 50°C under reduced pressure. It dyes wool and in particular polyamide fibres in red shade which show very good light and wet fastness properties (lamda(max) (λₘₐₓ) = 511 nm).

### Examples 3 - 28

Table 1 which follows contains dyes which can be prepared similarly to the method described in Examples 1 and 2 by using the corresponding starting materials. These dyes provide reddish dyeings having very good light and wet fastnesses on polyamide fibres and wool.

λ max (lambda max) is indicated in nm (nano meters; measured in 1 % acetic acid solution).

**Table 1:**

| | | | |
|---|---|---|---|
| 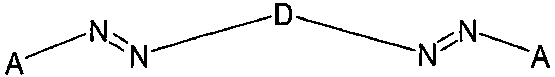 | | | |

| Example | D | A | λₘₐₓ [nm] |
|---|---|---|---|
| 4 | 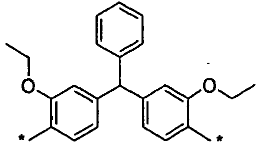 | 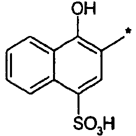 | 523 |
| 5 | 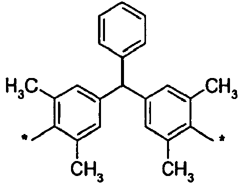 | 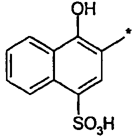 | 518 |
| 6 | 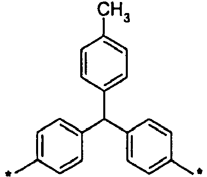 | 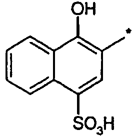 | 509 |
| 7 | 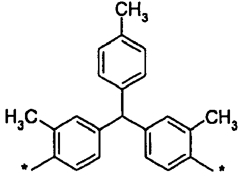 | 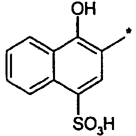 | 512 |
| 8 | 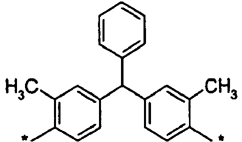 | 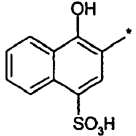 | 511 |
| 9 | 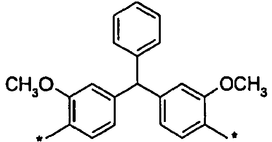 | 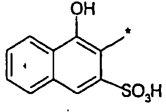 | 523 |
| 10 | 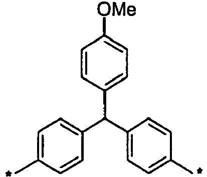 | 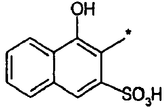 | 510 |
| 11 | 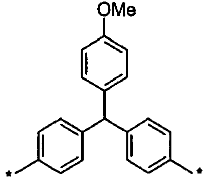 | 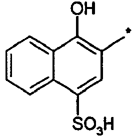 | 510 |
| 19 | 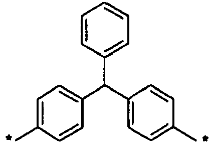 | 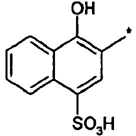 | 508 |
| 20 | 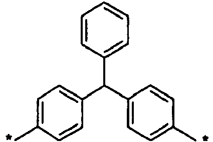 | 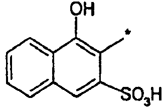 | 509 |
| 22 | 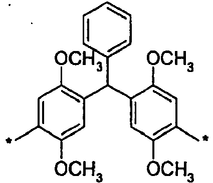 | 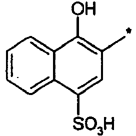 | 524 |
| 28 | 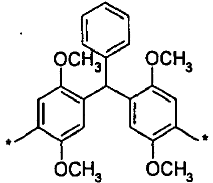 | 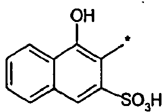 | 524 |

### USE EXAMPLE A

A dyebath at 40 °C, consisting of 2000 parts of water, 1 part of a weakly cation-active levelling agent which is based on an ethoxylated aminopropyl fatty acid amide and which has affinity for dye, 0.25 part of the dye of Preparation Example 1 and adjusted to pH 5 with 1-2 parts of 40 % acetic acid is entered with 100 parts of nylon-6 fabric. After 10 minutes at 40 °C, the dyebath is heated to 98 °C at a rate of 1 °C per minute and then left at the boil for 45-60 minutes. Thereafter it is cooled down to 70 °C over 15 minutes. The dyeing is removed from the bath, rinsed with hot and then with cold water and dried. The result obtained is a red polyamide dyeing possessing good light and wet fastnesses.

### USE EXAMPLE B

A dyebath at 40 °C, consisting of 2000 parts of water, 1 part of a weakly cation-active levelling agent which is based on an ethoxylated aminopropyl fatty acid amide and which has affinity for dye, 0.3 part of the dye of Preparation Example 1 and adjusted to pH 5.5 with 1-2 parts of 40 % acetic acid is entered with 100 parts of nylon-6,6 fabric. After 10 minutes at 40 °C, the dye bath is heated to 120 °C at a rate of 1.5 °C per minute and then left at this temperature for 15-25 minutes. Thereafter it is cooled down to 70 °C over 25 minutes. The dyeing is removed from the dye bath, rinsed with hot and then with cold water and dried. The result obtained is a red polyamide dyeing with good levelness and having good light and wet fastnesses.

### USE EXAMPLE C

A dyebath at 40 °C, consisting of 4000 parts of water, 1 part of a weakly amphoteric levelling agent which is based on a sulphated, ethoxylated fatty acid amide and which has affinity for dye, 0.4 part of the dye of Preparation Example 1 and adjusted to pH 5 with 1-2 parts of 40 % acetic acid is entered with 100 parts of wool fabric. After 10 minutes at 40 °C, the dyebath is heated to boiling at a rate of 1 °C per minute and then left at the boil for 40-60 minutes. Thereafter it is cooled down to 70 °C over 20 minutes. The dyeing is removed from the bath, rinsed with hot and then with cold water and dried. The result obtained is a red wool dyeing possessing good light and wet fastnesses.

### USE EXAMPLE D

100 parts of a woven nylon-6 material are padded with a 50°C liquor consisting of

| | |
|---|---|
| 40 | parts of the dye of Preparation Example 1, |
| 100 | parts of urea, |
| 20 | parts of a nonionic solubilizer based on butyldiglycol, |
| 15-20 | parts of acetic acid (to adjust the pH to 4), |
| 10 | parts of a weakly cation-active levelling agent which is based on an ethoxylated aminopropyl fatty acid amide and has affinity for dye, and |
| 810-815 | parts of water (to make up to 1000 parts of padding liquor). |

The material thus impregnated is rolled up and left to dwell in a steaming chamber under saturated steam conditions at 85-98 °C for 3-6 hours for fixation. The dyeing is then rinsed with hot and cold water and dried. The result obtained is a red nylon dyeing having good levelness in the piece and good light and wet fastnesses.

### USE EXAMPLE E

A textile cut pile sheet material composed of nylon-6 and having a synthetic base fabric is padded with a liquor containing per 1000 parts

| | |
|---|---|
| 1 | part of dye of Preparation Example 1 |
| 4 | parts of a commercially available thickener based on carob flour ether |
| 2 | parts of a nonionic ethylene oxide adduct of a higher alkylphenol |
| 1 | part of 60 % acetic acid. |

This is followed by printing with a paste which per 1000 parts contains the following components:

| | |
|---|---|
| 20 | parts of commercially available alkoxylated fatty alkylamine (displace product) |
| 20 | parts of a commercially available thickener based on carob flour ether. |

The print is fixed for 6 minutes in saturated steam at 100 °C, rinsed and dried. The result obtained is a level-coloured cover material having a red and white pattern.

### USE EXAMPLE F

A dyebath at 40 °C consisting of 2000 parts of water, 1 part of a weakly cation-active levelling agent which is based on an ethoxylated aminopropyl fatty acid amide and has affinity for dye, 1.5 parts of the dye of Example 1 and 1.5 parts of the red dyestuff of Example 3 or any other example from table 1 which is adjusted to pH 5 with 1-2 parts of 40 % acetic acid is entered with 100 parts of woven nylon-6,6 fabric. After 10 minutes at 40 °C, the dyebath is heated to 98°C at a rate of 1 °C per minute and then left at the boil for 45 to 60 minutes. This is followed by cooling down to 70°C over 15 minutes. The dyeing is removed from the bath, rinsed with hot and then with cold water and dried. The result obtained is a level reddish polyamide dyeing having good light and wet fastnesses.

### USE EXAMPLE G

100 parts of a chrome-tanned and synthetically retanned shave-moist grain leather are dyed for 30 minutes in a bath of 300 parts of water and 2 parts of the dye of Preparation Example 1 at 55 °C. After addition of 4 parts of a 60% emulsion of a sulphited fish oil, the leather is fatliquored for 45 minutes. It is then acidified with 8.5 % formic acid and milled for 10 minutes (final pH in the bath 3.5-4.0). The leather is then rinsed, allowed to drip dry and finished as usual. The result obtained is a leather dyed in a level clear orange hue with good fastnesses.

Use Examples A to G can also be carried out with dyes 2 to 29 with similar results.

### USE EXAMPLE H

3 parts of the dye of Preparation Example 3 are dissolved in 82 parts of demineralized water and 15 parts of diethylene glycol at 60°C. Cooling down to room temperature gives an orange printing ink which is very highly suitable for ink jet printing on paper or polyamide and wool textiles.

Use Example H can also be carried out with dyes 1 or 2 and 4 to 29 with similar results.

### USE EXAMPLE I

A dyebath consisting of 1000 parts of water, 80 parts of calcined Glauber salt, 1 part of sodium nitrobenzene-3-sulphonate and 1 part of dye from Example 1 is heated to 80°C in the course of 10 minutes. Then, 100 parts of mercerized cotton are added. This is followed by dyeing at 80°C for 5 minutes and then heating to 95°C in the course of 15 minutes. After 10 minutes at 95°C, 3 parts of sodium carbonate are added, followed by a further 7 parts of sodium carbonate after 20 minutes and another 10 parts of sodium carbonate after 30 minutes at 95 °C. Dyeing is subsequently continued at 95°C for 60 minutes. The dyed material is then removed from the dyebath and rinsed in running demineralized water for 3 minutes. This is followed by two washes for 10 minutes in 5000 parts of boiling demineralized water at a time and subsequent rinsing in running demineralized water at 60 °C for 3 minutes and with cold tap water for one minute. Drying leaves a brilliant red cotton dyeing having good fastnesses.

### USE EXAMPLE J

0.2 part of the dye of Preparation Example 1 is dissolved in 100 parts of hot water and the solution is cooled down to room temperature. This solution is added to 100 parts of chemically bleached sulphite pulp beaten in 2000 parts of water in a Hollander. After 15 minutes of commixing the stuff is sized with resin size and aluminium sulphate in a conventional manner. Paper produced from this stuff has a red shade with good wet fastnesses.

Use Examples I and J can also be carried out with dyes 2 to 29 with similar results.

## Claims

1. Compounds of the general formula (I) 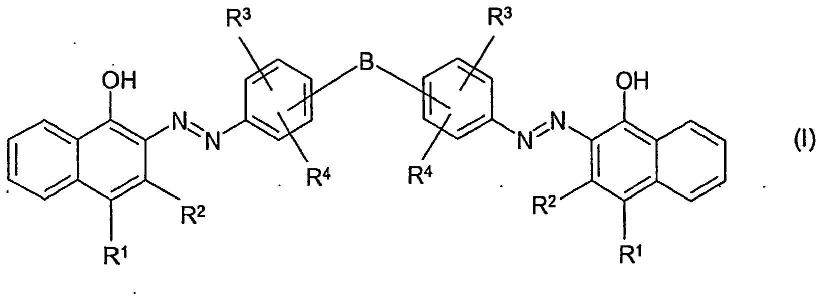
R¹ signifies H or a sulpho group
R² signifies H or a sulpho group, R¹ has to be different from R².
R³ signifies methoxy or methyl;
R⁴ signifies H,
B signifies a group with the formula -CR⁵R⁶-, wherein
R⁵ signifies H,
R⁶ signifies an unsubstituted aryl group or a substituted aryl group, wherein the aryl groups are phenyl groups and the substituted aryl groups are substituted by a methyl group or a methoxy group.

2. Process for preparing compounds of the formula (I) according to claim 1, **characterized in that** both the amine functions of the compounds of the formula (II) 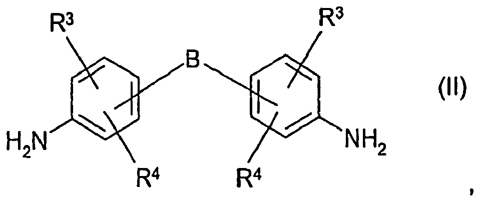 are diazotized and coupled onto totally two equivalents of a compound of the formula (III) 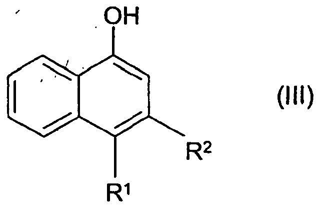 where the substituents are each as defined above.

3. Use of the compounds of the formula (I) according to claim 1 for dyeing and/or printing organic substrates.

4. Use of compounds of formula (I) according to claim 1 for dyeing and/or printing wool, silk and synthetic polyamides.

5. Use of compounds of formula (I) according to claim 1 for preparing printing inks for the InkJet process.

## Patentansprüche

1. Verbindungen der allgemeinen Formel (I) 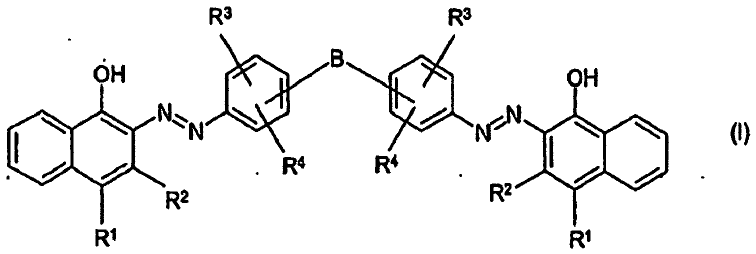 worin
R¹ H oder eine Sulfogruppe bedeutet,
R² H oder eine Sulfogruppe bedeutet, R¹ von R² verschieden sein muss,
R³ Methoxy oder Methyl bedeutet,
R⁴ H bedeutet,
B eine Gruppe mit der Formel -CR⁵R⁶- bedeutet, worin R⁵ H bedeutet,
R⁶ eine unsubstituierte Arylgruppe oder eine substituierte Arylgruppe bedeutet, wobei es sich bei den Arylgruppen um Phenylgruppen handelt, und die substituierten Arylgruppen durch eine Methylgruppe oder eine Methoxygruppe substituiert sind.

2. Verfahren zur Herstellung von Verbindungen der Formel (I) gemäß Anspruch 1, **dadurch gekennzeichnet, dass** man beide Aminfunktionen der Verbindungen der Formel (II) 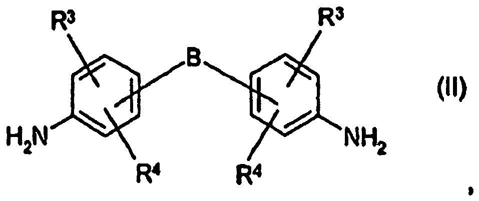 diazotiert und auf insgesamt zwei Äquivalente einer Verbindung der Formel (III) 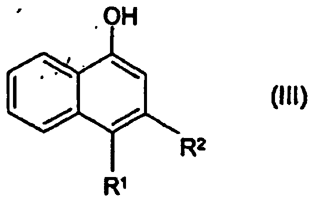 kuppelt, wobei die Substituenten jeweils die oben angegebenen Bedeutungen haben.

3. Verwendung der Verbindungen der Formel (I) gemäß Anspruch 1 zum Färben und/oder Bedrucken von organischen Substraten.

4. Verwendung von Verbindungen der Formel (I) gemäß Anspruch 1 zum Färben und/oder Bedrucken von Wolle, Seide und synthetischen Polyamiden.

5. Verwendung von Verbindungen der Formel (I) gemäß Anspruch 1 zur Herstellung von Drucktinten für das InkJet-Verfahren.

## Revendications

1. Composés représentés par la formule générale (I) 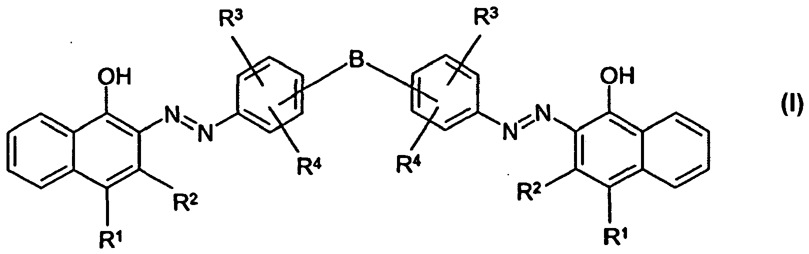 dans laquelle
R¹ désigne H ou un groupe sulfo,
R² désigne H ou un groupe sulfo, R¹ devant être différent de R²,
R³ désigne un groupe éthoxy ou méthyle,
R⁴ désigne H et
B désigne un groupe répondant à la formule -CR⁵R⁶-, dans laquelle
R⁵ désigne H et
R⁶ désigne un groupe aryle non substitué ou un groupe aryle substitué, les groupes aryle étant des groupes phényle et les groupes aryle substitués étant substitués par un groupe méthyle ou un groupe méthoxy.

2. Procédé pour la préparation de composés représentés par la formule (I) selon la revendication 1, **caractérisé en ce que** les deux fonctions amine des composés représentés par la formule (II) 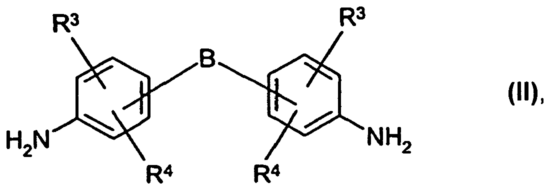 sont diazotées et couplées sur au total deux équivalents d'un composé représenté par la formule (III) 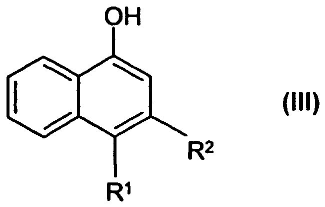 où les substituants sont chacun tels que définis ci-dessus.

3. Utilisation des composés représentés par la formule (I) selon la revendication 1 pour la teinture et/ou l'impression de substrats organiques.

4. Utilisation de composés de formule (I) selon la revendication 1 pour la teinture et/ou l'impression de laine, de soie et de polyamides synthétiques.

5. Utilisation de composés de formule (I) selon la revendication 1 pour la préparation d'encres d'impression pour le procédé par jet d'encre.
